## Europäisches Patentamt

## European Patent Office

## Office européen des brevets

(19)

(11) Veröffentlichungsnummer: **0 031 916**
**B1**

(12) **EUROPÄISCHE PATENTSCHRIFT**

(45) Veröffentlichungstag der Patentschrift:
**02.03.83**

(51) Int. Cl.³: **H 04 M 1/18,** H 04 M 19/04

(21) Anmeldenummer: **80107739.7**

(22) Anmeldetag: **09.12.80**

(54) **Elektrooptischer Wecker.**

(30) Priorität: **05.01.80 DE 3000278**

(43) Veröffentlichungstag der Anmeldung:
**15.07.81 Patentblatt 81/28**

(45) Bekanntmachung des Hinweises auf die Patenterteilung:
**02.03.83 Patentblatt 83/9**

(84) Benannte Vertragsstaaten:
**AT CH GB IT LI NL**

(56) Entgegenhaltungen:
**DE-A-2 831 125**
**DE-C-919 478**

(73) Patentinhaber: **Neumann Elektronik GmbH,
Bülowstrasse 104 - 110, D-4330 Mülheim 1 (DE)**

(72) Erfinder: **Neumann, Dirk, Dipl.-Ing., Schemelsbruch 11,
D-4330 Mülheim 1 (DE)**

(74) Vertreter: **Feder, Heinz, Dr. et al, Postfach 11 04 26,
D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Elektrooptischer Wecker

Gegenstand der Erfindung ist ein elektrooptischer Wecker für eine Fernsprechteilnehmerstelle.

Der bei jeder Fernsprechteilnehmerstelle im Telefonapparat eingebaute elektroakustische Wecker dient dazu, einem Teilnehmer einen ankommenden Anruf zu melden. Betrieben wird der elektroakustische Wecker mit den vom Fernmeldeamt ausgesendeten Rufsignalen, die eine Wechselspannung von ca. 50 V und eine Frequenz von 25 bzw. 50 Hz besitzen und in einem bestimmten vorgegebenen Rhythmus ausgesendet werden.

Es sind auch schon elektrooptische Wecker bekannt, mit deren Hilfe zusätzlich zum akustischen Signal des elektroakustischen Weckers bei einem Anruf ein optisches Signal abgegeben wird. Es ist auch bekannt, zur Abgabe des optischen Signals eine Elektronenblitzlampe zu verwenden (siehe DE-A-2 831 125). Bei dem bekannten elektrooptischen Wecker erfolgt die Zündung der Blitzlampe durch einen, aufgrund des abgegebenen Rufsignals erzeugten Impuls, der in der Weise erzeugt wird, daß der den Ruf auslösende Impuls induktiv auf eine Koppelspule übertragen wird, die unterhalb des Telefonapparates und außerhalb des Gehäuses des Telefonapparates angeordnet ist.

Zur Speisung der Blitzlampe benötigt der bekannte elektrooptische Wecker eine eigene Spannungsquelle. Der elektrooptische Wecker muß also beispielsweise an das vorhandene Stromnetz angeschlossen sein.

Da einerseits elektrooptische Wecker in zunehmendem Maße zusätzlich zu den elektroakustischen Weckern zum Einsatz kommen, beispielsweise in Räumen mit großem Umgebungslärm, für Personen, die dichte Lärmschutzhelme tragen etc., andererseits aber in vielen Fällen eine Möglichkeit zum Betreiben des elektrooptischen Weckers mit Fremdenergie fehlt oder der Anschluß an das elektrische Netz nicht möglich ist, wie beispielsweise in Feuchträumen, Schwimmhallen, Ställen, explosionsgefährdeten Räumen etc., liegt der vorliegenden Erfindung die Aufgabe zugrunde, einen elektrooptischen Wecker zu schaffen, der ohne Fremdenergiebedarf betrieben werden kann und der demzufolge nicht beispielsweise an das elektrische Netz angeschlossen werden muß.

Die Lösung dieser Aufgabe geschieht erfindungsgemäß dadurch, daß zwischen die beiden Zweige der Fernsprechleitung parallel zum elektroakustischen Wecker die Primärwicklung eines Transformators geschaltet ist, an dessen Sekundärwicklung eine Schaltungseinrichtung angeschlossen ist, durch welche die elektrische Energie zur Speisung und Zündung einer Blitzlampe den über die Fernsprechleitung ankommenden Rufsignalen entnommen wird.

Bei dem erfindungsgemäßen elektrooptischen Wecker erfolgt also sowohl die Zündung als auch die Speisung des optischen Anzeigegerätes durch das über die Fernsprechleitung zugeführte Rufsignal. Dies bedeutet, daß der Leistungsverbrauch des elektrooptischen Weckers möglichst gering sein muß. Seine Erkennbarkeit soll jedoch groß sein. Aus diesem Grunde ist die Verwerdung einer Blitzlampe bei dem erfindungsgemäßen Wecker von besonderer Bedeutung, die bei geringem Leistungsverbrauch eine große Lichtstärke liefert.

Bei einer besonders einfachen Ausführungsform des erfindungsgemäßen Weckers weist die Schaltungseinrichtung zur Speisung und Zündung der Blitzlampe einen über die Gleichrichter an die Sekundärwicklung des Transformators angeschlossenen Ladekondensator auf, dem die Blitzlampe parallelgeschaltet ist, und es ist eine Mittelanzapfung der Sekundärwicklung des Transformators über einen Gleichrichter sowie ein RC-Glied und eine Glimmlampe mit der Eingangswicklung eines Zündtransformators verbunden, dessen Ausgangswicklung mit der Zündelektrode der Blitzlampe verbunden ist.

Der erfindungsgemäße elektrooptische Wecker kann mit sehr hohem Wirkungsgrad betrieben werden und ist überall dort einsetzbar, wo eine eigene Spannungsversorgung zur Speisung der Blitzlampe nicht zur Verfügung steht.

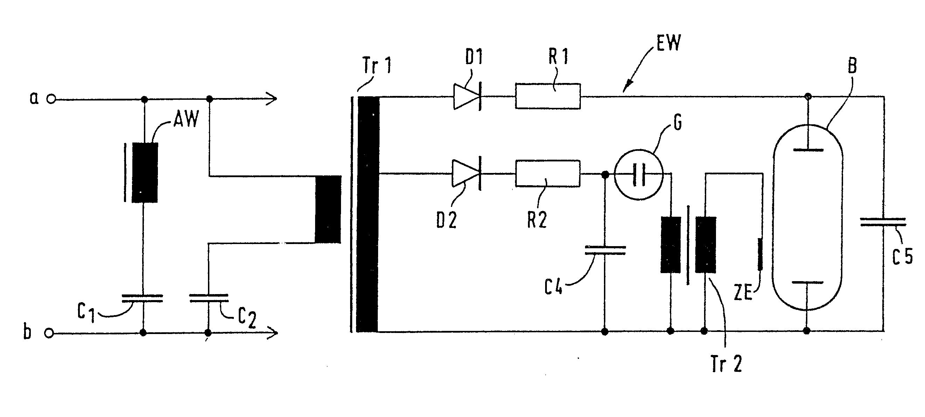

In der Zeichnung ist ein Ausführungsbeispiel für einen elektrooptischen Wecker nach der Erfindung dargestellt.

An die vom Fernmeldeamt kommende Fernsprechleitung a, b ist zunächst in bekannter Weise ein elektroakustischer Wecker AW angeschlossen, der gleichstrommäßig von der Fernmeldeleitung durch einen Abriegelkondensator C1 abgetrennt ist.

Parallel zum elektroakustischen Wecker AW liegt die Primärwicklung eines Transformators Tr1, die ebenfalls durch einen Abriegelkondensator C2 gleichstrommäßig von der Fernsprechleitung getrennt ist.

An die Sekundärwicklung des Transformators Tr1 ist über einen Gleichrichter D1 und einen Widerstand R1 ein Ladekondensator C5 angeschlossen, dem die Blitzlampe B parallel geschaltet ist. An eine Mittelanzapfung der Sekundärwicklung des Transformators Tr1 ist über einen Gleichrichter D2 und ein RC-Glied R2-C4 sowie eine Glimmlampe G die Eingangswicklung eines Zündtransformators Tr2 angeschlossen, dessen Ausgangswicklung mit der Zündelektrode ZE der Blitzlampe B verbunden ist.

Die Wirkungsweise der dargestellten Schaltung ist direkt aus der Zeichnung abzulesen. Die über die Fernsprechleitung ankommende Rufwechselspannung wird vom Transformator Tr1 auf ca. 300 V herauftransformiert, und der Ladekondensator C5 lädt sich auf. Von der Mittelanzapfung des Transformators Tr1 her wird die Zündspannung für die Blitzlampe B abgeleitet. Sobald nach Aufladung des Kondensators C4 die Zündspannung der Glimmlampe G erreicht ist, wird über den Zündtransformator Tr2 der Zündimpuls an die Blitzlampe B gegeben, über welche sich dann der Ladekondensator C5 entlädt, wobei der Lichtblitz ausgesendet wird.

Als Beispiel sei angenommen, daß die Rufwechselspannung jeweils 1,5 s anliegt und durch Pausen von 4,75 s unterbrochen wird. Die Schaltungseinrichtung EW zur Speisung der Blitzlampe B sei so bemessen, daß der Ladekondensator C5 während 1 s mit einem Leistungsverbrauch von 0,2 W aufgeladen wird. Die Entladung des Ladekondensators C5 über die Blitzlampe B innerhalb von ca. 0,001 s ergibt eine Lichtleistung von ca. 200 W in 0,001 s. Da kein Umrichter verwendet wird, ist der Wirkungsgrad außerordentlich hoch.

**Patentansprüche**

1. Elektrooptischer Wecker für eine Fernsprechteilnehmerstelle, dadurch gekennzeichnet, daß zwischen die beiden Zweige der Fernsprechleitung (a, b) parallel zum elektroakustischen Wecker (AW) die Primärwicklung eines Transformators (Tr1) geschaltet ist, an dessen Sekundärwicklung eine Schaltungseinrichtung (EW) angeschlossen ist, durch welche die elektrische Energie zur Speisung und Zündung einer Blitzlampe (B) den über die Fernsprechleitung (a, b) ankommenden Rufsignalen entnommen wird.

2. Elektrooptischer Wecker nach Anspruch 1, dadurch gekennzeichnet, daß die Schaltungseinrichtung (EW) zur Speisung und Zündung der Blitzlampe (B) einen über einen Gleichrichter (D1) an die Sekundärwicklung des Transformators (Tr1) angeschlossenen Ladekondensator (C5) aufweist, dem die Blitzlampe (B) parallel geschaltet ist, und eine Mittelanzapfung der Sekundärwicklung des Transformators (Tr1) über einen Gleichrichter (D2) sowie ein RC-Glied (R2, C4) und eine Glimmlampe (G) mit der Eingangswicklung eines Zündtransformators (Tr2) verbunden ist, dessen Ausgangswicklung mit der Zündelektrode (ZE) der Blitzlampe (B) verbunden ist.

**Claims**

1. An electro-optical ringer for a telephone subscriber station, characterized in that the primary winding of a transformer (Tr1) is connected between the two branches of the telephone line (a, b) parallel to the electroacoustic ringer (AW), the secondary winding of said transformer (Tr1) being connected to a switching arrangement (EW) by means of which the electric energy for energizing and igniting a flash lamp (B) is taken from the call signals arriving through said telephone line (a, b).

2. An electro-optical ringer as claimed in claim 1, characterized in that the switching arrangement (EW) for energizing and igniting the flash lamp (B) comprises a charging condenser (C5) which is connected to the secondary winding of the transformer (Tr1) through a rectifier (D1), and which is connected in parallel to said flash lamp (B), and that an intermediate tapping of said secondary winding of said transformer (Tr1) is connected, through a rectifier (D2) as well as through a RC-combination (R2, C4) and a glow lamp (G), with the input winding of an ignition transformer (Tr2) the output winding of which is connected to the ignition electrode (ZE) of said flash lamp (B).

**Revendications**

1. Avertisseur d'appel électro-optique pour un poste d'abonné au téléphone, caractérisé par le fait qu'entre les deux branches de la ligne téléphonique (a, b) est monté en parallèle à la sonnerie électro-acoustique (A, W), l'enroulement primaire d'un transformateur (Tr1), à l'enroulement secondaire duquel est connecté un dispositif de commutation (EW) à travers lequel est prélevée l'énergie électrique pour l'alimentation d'une lampe-éclair (B) et l'allumage dans celle-ci des signaux d'appel en provenance de la ligne téléphonique (a, b).

2. Avertisseur d'appel électro-optique selon la revendication 1, caractérisé par le fait que le dispositif de commutation (EW) pour l'alimentation et l'allumage de la lampe-éclair (B) présente un condensateur de charge (C5) connecté à l'enroulement secondaire du transformateur (Tr1), et en parallèle duquel est montée la lampe-éclair (B), et qu'une prise médiane de l'enroulement secondaire du transformateur (Tr1) est reliée par l'intermédiaire d'un redresseur (D2) ainsi que d'un circuit RC (R2, C4) et une lampe à lueur (G), à l'enroulement d'entrée d'un transformateur d'allumage (Tr2), dont l'enroulement de sortie est relié à l'électrode d'allumage (ZE) de la lampe-éclair.